# EUROPÄISCHE PATENTANMELDUNG

(11) **EP 1 119 209 A2**
(43) Veröffentlichungstag der Anmeldung: **25.07.2001**
(21) Anmeldenummer: 00128726.7
(22) Anmeldetag: 29.12.2000
(51) Int. Cl.: H04Q 3/62

(54) **Verfahren zur Übermittlung einer Durchwahlnummer im analogen Telefonnetz**

(30) Priorität: 19.01.2000 DE 10002034
(71) Anmelder: Tenovis GmbH & Co. KG, 60326 Frankfurt (DE)
(72) Erfinder: Woike, Rüdiger, 38527 Meine-Abbesbuettel (DE)
(74) Vertreter: Patentanwaltskanzlei WILHELM & BECK

(57) **Zusammenfassung**

Bei einem Verfahren zur Realisierung der Durchwahl zu einer Nebenstelle (11) im analogen Telefonnetz wird die Durchwahlziffer (d) zusammen mit der Rufnummer (A) des Anrufers von der Vermittlungsstelle (2) an die Nebenstellenanlage (7) übertragen. Wie beim Dienstleistungsmerkmal CLIP wird dabei die Information zwischen dem ersten und zweiten Klingelzeichen eingefügt, wobei die Rufnummer (A) des Anrufers von der Durchwahlziffer (d) vorzugsweise durch Leerzeichen getrennt wird. Entsprechende Schaltungen (8) in der Nebenstellenanlage (7) erlauben die Separation der Durchwahlziffern (d) von der Rufnummer (A) des Anrufers und damit die Weiterschaltung des Anrufes an das durch die Ziel-Rufnummer (Z) und die Durchwahl (d) gekennzeichnete Endgerät (11).

## Beschreibung

Die Erfindung betrifft ein Verfahren zur Übermittlung einer Durchwahl im analogen Telefonnetz, wobei von der Vermittlungsstelle an die Nebenstellenanlage des Angerufenen die Rufnummer des Anrufers übermittelt wird. Ferner betrifft die Erfindung eine Vermittlungsstelle und eine Nebenstellenanlage, die zur Durchführung des Verfahrens geeignet sind.

Es ist bekannt, als Endstelle an ein Fernsprechnetz eine Nebenstellenanlage (Wählanlage) anzuschließen, welche eine Vermittlungs- und Konzentratorfunktion übernimmt. Derartige Nebenstellenanlagen sind zum Beispiel in Unternehmen und Behörden sinnvoll, in denen ein hohes Aufkommen an internen Telefongesprächen besteht. Die Nebenstellenanlage ist einerseits als Hauptanschluss über eine oder mehrere Amtsleitungen mit dem öffentlichen Fernsprechnetz verbunden und andererseits mit einer größeren Anzahl interner Telefonapparate beziehungsweise anderer Endgeräte (Nebenstellen). Wenn die Nebenstellenanlage mit der Möglichkeit der Durchwahl (direct dial in) ausgestattet ist, kann vom öffentlichen Fernsprechnetz aus direkt eine der Nebenstellen angewählt werden. Andernfalls findet die Auswahl und Weiterleitung vom öffentlichen Fernsprechnetz an die Nebenstelle durch die Nebenstellenanlage statt.

Im digitalen ISDN-Telefonnetz sind zwei Arten von Anschlüssen bekannt, welche eine Durchwahl zu an den Hauptanschluss angeschlossenen Nebenstellen erlauben. Dabei handelt es sich zum einen um den sogenannten Anlagenanschluss, bei dem die Durchwahl (Erreichen eines gezielten Teilnehmers in einer Nebenstelle) Inhalt des Anlagenanschlusses ist. Beim sogenannten Mehrgeräteanschluss kann eine ISDN-Telefonanlage angeschlossen werden, wobei dann in der Anlage die Zuordnung zwischen den mehreren Telefonnummern des Hauptanschlusses (MSN) zu den gewünschten Nebenstellen erfolgt. In beiden Fällen ist die Möglichkeit einer Durchwahl gewährleistet.

Dagegen besteht bei analogen Telefonanschlüssen keine einfache Möglichkeit der Durchwahl. Hier kann eine Nebenstellenanlage oder ein Telefon mit mehreren Nebenstellen nur zentral angerufen werden, wobei üblicherweise alle dort angeschlossenen Nebenstellen klingeln oder nur eine fest vorgegebene.

Aufgabe der Erfindung war es, ein einfaches Verfahren und Vorrichtungen zur Verfügung zu stellen, mit denen auch bei analogen Telefon-Hauptanschlüssen die Durchwahl zu Nebenstellen möglich ist.

Diese Aufgabe wird durch ein Verfahren mit den Merkmalen des Anspruches 1 gelöst.

Das Verfahren dient der Übermittlung einer Durchwahl im analogen Telefonnetz, wobei von der Vermittlungsstelle des öffentlichen Fernsprechnetzes an die Nebenstellenanlage beziehungsweise den Telefonhauptanschluss des Angerufenen die Rufnummer des Anrufers übermittelt wird. Diese Übermittlung der Rufnummer des Anrufenden ist ein Dienstleistungsmerkmal von analogen Telefonsystemen nach dem Stand der Technik, welches als CLIP (Caller Line Identification Presentation) bezeichnet wird. Das Verfahren ist dadurch gekennzeichnet, dass eine Durchwahlziffer oder mehrere Durchwahlziffern zusammen mit der Rufnummer des Anrufers übermittelt werden und dass sie von der Nebenstellenanlage von der Rufnummer des Anrufers wieder separiert werden. Das erfindungsgemäße Verfahren nutzt also einen bereits vorhandenen Weg zur Rufnummern- bzw. Datenübermittlung zwischen der Vermittlungsstelle und einer Nebenstellenanlage aus, um auf diesem Weg auch Information über die vom Anrufer gewünschte Nebenstelle zu übermitteln. Auf diese Weise wird es mit analogen Telefonanlagen in einfacher Weise möglich, die Durchwahlfunktion auszuüben.

Bei der gemeinsamen Übermittlung der Rufnummer des Anrufers und der Durchwahlziffern wird gemäß Anspruch 2 zwischen diesen beiden Informationen vorzugsweise eine Separationskennung übermittelt. Hierbei kann es sich um jedes beliebige Zeichen beziehungsweise Signal handeln, welches von der Nebenstellenanlage eindeutig von einer Ziffer aus der Rufnummer des Anrufers und von einer Durchwahlziffer unterschieden werden kann. Die Separationskennung erlaubt es daher der Nebenstellenanlage, die Rufnummer des Anrufers und die Durchwahlziffern voneinander zu trennen.

Die Nebenstellenanlage kann gemäß Anspruch 3 anhand der übermittelten Durchwahlziffern die Weiterleitung des Anrufes an das den Durchwahlziffern zugeordnete Endgerät vornehmen. Damit ist es dem externen Anrufer möglich, gezielt eine Verbindung zu einer Nebenstelle des Telefon-Hauptanschlusses herzustellen. Der Umweg über die Vermittlungszentrale kann hierdurch vermieden werden.

Gemäß Anspruch 4 werden die Rufnummer des Anrufers und die Durchwahlziffern zwischen zwei Klingelzeichen übermittelt, vorzugsweise zwischen dem ersten und dem zweiten Klingelzeichen. Klingelzeichen sind die elektrischen Signale, mit denen die Vermittlungsstelle dem Angerufenen einen Ruf signalisiert und die vom Telefon oder der Nebenstellenanlage in Rufsignale umgesetzt werden. Bei dem genannten Verfahren werden dabei vorhandene Pausen während der Klingelzeichen von der Vermittlungsstelle zur Übertragung der genannten Daten ausgenutzt.

Dabei wird gemäß Anspruch 5 durch die Nebenstellenanlage beim Angerufenen die Abgabe von Klingelzeichen, d.h. deren Umsetzung in Rufsignale (Klingeltöne etc.), so lange unterdrückt, bis die Weiterleitung des Anrufers an das durch die Durchwahlziffer gekennzeichnete Endgerät (Nebenstelle) erfolgt ist. Hierdurch wird gewährleistet, dass nicht an der Vermittlungsstelle oder an solchen Nebenstellen Rufsignale abgegeben werden, zu denen der Anrufer keine Verbindung wünscht.

Die Ziel-Rufnummer wird gemäß Anspruch 6 vorzugsweise zusammen mit den Durchwahlziffern im Blockwahlverfahren vom Anrufer an die Vermittlungsstelle übermittelt. Beim Blockwahlverfahren gibt der Benutzer die gewünschte Rufnummer zuerst in einen Speicher ein und betätigt dann die Hörertaste beziehungsweise hebt den Hörer ab, um die Verbindung zur Vermittlungsstelle herzustellen.

Die Erfindung betrifft weiterhin eine Vermittlungsstelle nach Anspruch 7, die für die Durchführung eines Verfahrens der oben erläuterten Art zur Übermittlung einer Durchwahl geeignet ist. Diese Vermittlungsstelle ist
dadurch gekennzeichnet, dass sie Mittel zur Abtrennung der Durchwahlziffern von der Ziel-Rufnummer sowie Mittel zur Übermittlung der Durchwahlziffern zusammen mit der Rufnummer des Anrufers an den Angerufenen enthält. Die genannten Mittel können bei existierenden Vermittlungsstellen mit verhältnismäßig geringem Aufwand eingerichtet werden, so dass auch ein Nachrüsten solcher Anlagen möglich ist. Insbesondere können die Mittel durch eine entsprechende Software in der Steuerungseinheit der Vermittlungsstelle verwirklicht werden.

Weiterhin betrifft die Erfindung nach Anspruch 8 eine Nebenstellenanlage, die für die Durchführung eines Verfahrens der oben erläuterten Art zur Übermittlung einer Durchwahl geeignet ist. Diese Nebenstellenanlage ist dadurch gekennzeichnet, dass sie Mittel zur Separation der Durchwahlziffern von der Rufnummer des Anrufenden sowie Mittel zur Weiterleitung des Anrufes an das der Durchwahlziffer zugeordnete Endgerät aufweist. Auch hier ist es mit verhältnismäßig geringem Aufwand möglich, eine Nebenstellenanlage mit den gewünschten Funktionen auszustatten. Insbesondere können auch hier die Funktionen durch entsprechende Programmierung der Software der Nebenstellenanlage erzielt werden.

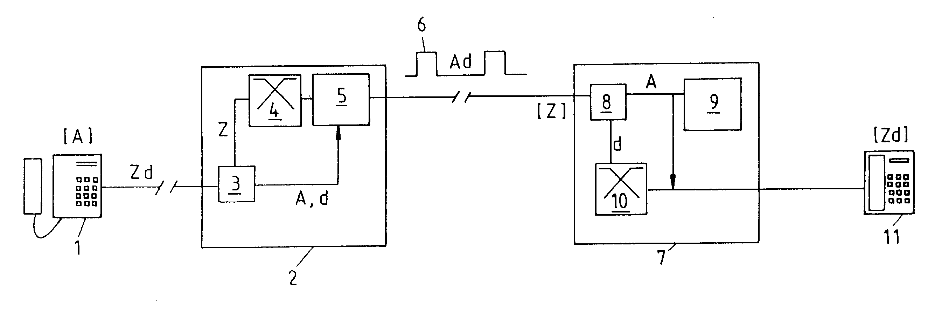

Im folgenden wird die Erfindung mit Hilfe der Figur beispielhaft erläutert.

Die Abbildung zeigt den Verbindungsweg von einem Telefonapparat 1 eines Anrufers mit der Rufnummer A über die Vermittlungsstelle 2 zur Nebenstellenanlage 7 des Angerufenen und von dort zum gewünschten Endgerät 11. Bei dem dargestellten System handelt es sich um ein analoges Telefonnetz. Dieses bietet in der Regel nicht die Möglichkeit, dass ein Anrufer vom Telefongerät 1 sich direkt zu einer Nebenstelle 11 der Nebenstellenanlage 7 durchwählen kann. Vielmehr wird der Anrufer üblicherweise nur mit der Nebenstellenanlage 7, die die Ziel-Rufnummer Z hat, verbunden, wobei dort entweder alle Apparate oder nur ein bestimmter Apparat klingelt.

Mit dem erfindungsgemäßen Verfahren wird indes eine gezielte Durchwahl zu einer Nebenstelle 11 mit der Durchwahlkennziffer d auch im analogen Telefonnetz in einfacher Weise möglich. Das Verfahren nutzt dabei das bekannte Dienstleistungsmerkmal CLIP (Caller Line Identification Presentation) der Übertragung der Rufnummer A des Anrufers an den Angerufenen (analog zum ISDN-Leistungsmerkmal "Rufnummernanzeige").

Das Verfahren beginnt damit, dass der Anrufer am Telefongerät 1 mit der Rufnummer A zunächst die Ziel-Rufnummer z eintippt und direkt anschließend hieran die Durchwahlziffer oder die Durchwahlziffern d (Nebenstellennummern, zum Beispiel "5"). Dann betätigt der Anrufer die Hörertaste beziehungsweise er hebt den Hörer ab. Das heißt, dass er eine sogenannte Blockwahl oder automatische Wahl vornimmt, wie man sie zum Beispiel beim Wählen aus einem Wahlspeicher des Telefonbuches nutzt.

Die Ziel-Rufnummer Z wird zusammen mit der Durchwahl d zur Vermittlungsstelle 2 übertragen. Hier sorgt eine erweiterte Teilnehmerschaltung beziehungsweise ein Filter 3 dafür, dass die Ziel-Rufnummer Z von der Durchwahlziffer d getrennt wird. Das System der Vermittlungsstelle weiß nämlich, wann die Rufnummer des gerufenen Teilnehmers zu Ende ist und wann eine mögliche Nachwahl beginnt. Die Ziel-Rufnummer Z wird dann in bekannter Weise an eine Vermittlungseinheit 4 weitergeleitet, in welcher die Kopplung mit der Telefonleitung des Angerufenen stattfindet. Die so hergestellte Verbindung wird über eine Ausgangsschaltung 5 geleitet, welche von dem Filter 3 auch die Durchwahlziffern d sowie die Rufnummer des Anrufers A mitgeteilt bekommt. In dieser Ausgangsschaltung 5 werden daraufhin die Rufsignale (Klingelzeichen) an den angerufenen Teilnehmer erzeugt. Dabei wird gemäß dem bekannten Dienstleistungsmerkmal CLIP zwischen dem ersten und zweiten Klingeln die Rufnummer A des Anrufers als FSK-Signal übertragen. Erfindungsgemäß findet hierbei ferner eine Übertragung der Durchwahlziffern d statt, welche von der Rufnummer A des Anrufenden zum Beispiel durch Leerzeichen getrennt angehängt sind.

Die Nebenstellenanlage 7 beziehungsweise das dort angeschlossene Telefon besitzt einen Filter 8, welcher anhand der Leerzeichen erkennt, welcher Teil des CLIP-Signals die Rufnummer des Anrufers A und welcher die Durchwahlziffer d ist. Diese beiden Teile werden separiert, wobei die Rufnummer des Anrufers A entsprechend weiterverarbeitet wird, zum Beispiel an einem Display 9 angezeigt werden kann. Die abgetrennte Durchwahlziffer d erlaubt es einer Vermittlungsschaltung 10, die gewünschte Nebenstelle 11 mit der Rufnummer Zd auszuwählen und dort ein Klingelzeichen ertönen zu lassen. Vorzugsweise wird dabei die Rufnummer A des Anrufers mit zur Nebenstelle 11 übertragen, um dort angezeigt zu werden.

### Bezugszeichen:

- 1: Telefon (Anrufer)
- 2: Vermittlungsstelle
- 3: Filter
- 4: Koppelschaltung
- 5: Rufnummern-Aufschaltung
- 6: Rufsignal
- 7: Nebenstellenanlage
- 8: Filter
- 9: Display
- 10: Koppelschaltung
- 11: Telefon (Angerufener)

## Patentansprüche

1. Verfahren zur Übermittlung einer Durchwahl im analogen Telefonnetz, wobei von der Vermittlungsstelle (2) an die Nebenstellenanlage (7) des Angerufenen die Rufnummer (A) des Anrufers übermittelt wird,
dadurch **gekennzeichnet,**
dass die Durchwahlziffern (d) zusammen mit der Rufnummer (A) des Anrufers übermittelt werden und dass sie von der Nebenstellenanlage (7) von der Rufnummer des Anrufers wieder separiert werden.

2. Verfahren nach Anspruch 1,
dadurch gekennzeichnet, dass zwischen den Durchwahlziffern (d) und der Rufnummer (A) des Anrufers eine Separationskennung übermittelt wird.

3. Verfahren nach Anspruch 1 oder 2,
dadurch gekennzeichnet, dass die Nebenstellenanlage (7) anhand der übermittelten Durchwahlziffern (d) die Weiterleitung des Anrufers an das zugeordnete Endgerät (11) vornimmt.

4. Verfahren nach einem der Ansprüche 1 bis 3,
dadurch gekennzeichnet, dass die Rufnummer (A) des Anrufers und die Durchwahlziffern (d) zwischen zwei Klingelzeichen, vorzugsweise zwischen dem ersten und dem zweiten Klingelzeichen, übermittelt werden.

5. Verfahren nach Anspruch 4,
dadurch gekennzeichnet, dass bis zur Weiterleitung des Anrufes an das durch die Durchwahlziffer (d) bestimmte Endgerät (11) die Abgabe von Klingelzeichen unterdrückt wird.

6. Verfahren nach einem der Ansprüche 1 bis 5,
dadurch gekennzeichnet, dass die Ziel-Rufnummer (Z) zusammen mit den Durchwahlziffern (d) im Blockwahlverfahren vom Anrufer an die Vermittlungsstelle (2) übermittelt werden.

7. Vermittlungsstelle (2), die für die Durchführung eines Verfahrens nach einem der Ansprüche 1 bis 6 geeignet ist,
dadurch **gekennzeichnet,**
dass sie Mittel (3) zur Abtrennung der Durchwahlziffern (d) von der Ziel-Rufnummer (Z) sowie Mittel (5) zur Übermittlung der Durchwahlziffern (d) zusammen mit der Rufnummer (A) des Anrufers an den Angerufenen aufweist.

8. Nebenstellenanlage (7), die für die Durchführung eines Verfahrens nach einem der Ansprüche 1 bis 6 geeignet ist,
dadurch **gekennzeichnet,**
dass sie Mittel (8) zur Separation der Durchwahlziffer (d) von der Rufnummer (A) des Anrufers sowie Mittel (10) zur Weiterleitung des Anrufes an das der Durchwahlziffer zugeordnete Endgerät (11) aufweist.
